(19) **Europäisches Patentamt**

**European Patent Office**

**Office européen des brevets**

(11) **EP 1 300 832 B1**

(12) **EUROPEAN PATENT SPECIFICATION**

(45) Date of publication and mention
of the grant of the patent:
**06.09.2006 Bulletin 2006/36**

(51) Int Cl.:
**G10L 21/02** (2006.01)   **H03G 3/20** (2006.01)
**G10L 15/02** (2006.01)

(21) Application number: **01947936.9**

(22) Date of filing: **09.07.2001**

(86) International application number:
**PCT/JP2001/005950**

(87) International publication number:
**WO 2002/005266 (17.01.2002 Gazette 2002/03)**

(54) **SPEECH RECOGNIZER, METHOD FOR RECOGNIZING SPEECH AND SPEECH RECOGNITION PROGRAM**

VERFAHREN, VORRICHTUNG UND PROGRAMM ZUR SPRECHERKENNUNG

SYSTEME DE RECONNAISSANCE DE LA PAROLE, PROCEDE DE RECONNAISSANCE DE LA PAROLE ET PROGRAMME DE RECONNAISSANCE DE LA PAROLE

(84) Designated Contracting States:
**DE FR GB**

(30) Priority: **10.07.2000 JP 2000208083**
**04.07.2001 JP 2001203754**

(43) Date of publication of application:
**09.04.2003 Bulletin 2003/15**

(73) Proprietor: **MATSUSHITA ELECTRIC INDUSTRIAL CO., LTD.**
**Kadoma-shi, Osaka 571-8501 (JP)**

(72) Inventors:
• **KAWANE, Tomoe**
**Nishinomiya-shi, Hyogo 663-8231 (JP)**
• **KANAMORI, Takeo**
**Hirakata-shi, Osaka 573-0013 (JP)**

(74) Representative: **Calderbank, Thomas Roger et al**
**Mewburn Ellis LLP**
**York House**
**23 Kingsway**
**London WC2B 6HP (GB)**

(56) References cited:
**JP-A- 8 115 098**     **JP-A- 11 126 093**
**JP-A- 63 316 097**     **JP-B2- 2 975 808**
**JP-U- 60 016 200**     **JP-Y2- 2 500 761**

• **PATENT ABSTRACTS OF JAPAN vol. 1999, no. 13, 30 November 1999 (1999-11-30) & JP 11 212595 A (OLYMPUS OPTICAL CO LTD), 6 August 1999 (1999-08-06)**
• **PATENT ABSTRACTS OF JAPAN vol. 1995, no. 03, 28 April 1995 (1995-04-28) & JP 06 337697 A (SANYO ELECTRIC CO LTD), 6 December 1994 (1994-12-06)**

**Description**

Technical Field

The present invention relates to a speech recognition device that recognizes speech issued by a person, a speech recognition method and a speech recognition program.

Background Art

In recent years, there has been significant progress in the technology related to speech recognition. The speech recognition refers to automatic identification of human speech by a computer or a machine. For example, using the speech recognition technique, the computer or machine can be operated in response to human speech or the human speech can be converted into text.

According to a method mainly used in the speech recognition, physical characteristics such as the frequency spectrum of an issued speech are extracted, and compared to pre-stored types of physical characteristics of vowels, consonants, or words. When speech by a number of unspecified speakers is recognized, however, individual differences in the physical characteristics between the speakers impair accurate speech recognition. If a speech by a particular speaker is recognized, noises caused by changes in the environment such as differences between in the daytime and at night, or changes in the physical characteristics of the speech depending on the health condition of the speaker can lower the speech recognition ratio, in other words accurate speech recognition cannot be performed.

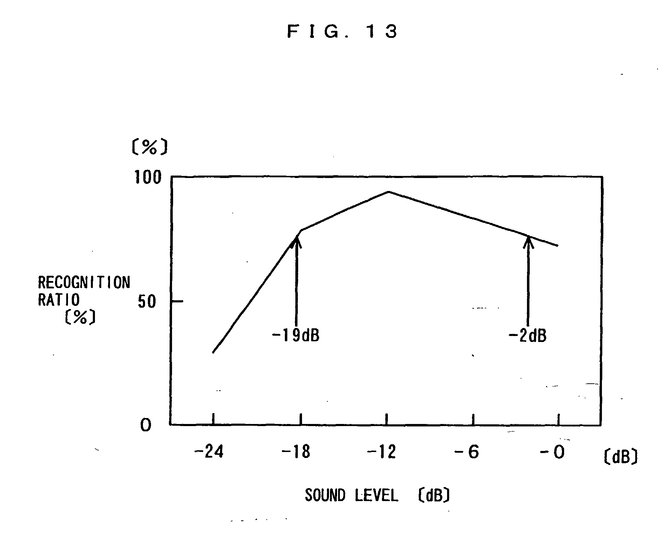

Fig. 13 is a schematic graph showing an example of the relation between the sound level and the recognition ratio in the speech recognition. In the graph shown in Fig. 13, the ordinate represents the recognition ratio (%), while the abscissa represents the sound level (dB). Herein, the sound level means the level of speech power. At 0 dB, for example, the load resistance is 600 U, the inter-terminal voltage is 0.775 V, and the power consumption is 1 mW.

As shown in Fig. 13, according to the conventional speech recognition technique, the recognition ratio is lowered when the sound level tends to be lower than -19 dB or higher than -2 dB.

According to the conventional speech recognition technique, the recognition ratio is high in the vicinity of the prestored sound level representing the type of physical characteristics of vowels, consonants, or words. More specifically, the pre-stored sound level and an input sound level are compared for speech recognition, and therefore equally high recognition ratios do not result for high to low sound levels.

Japanese Utility Model Laid-Open No. 59-60700 discloses a speech recognition device that keeps the input sound level substantially constant using an AGC circuit (Auto Gain Controller) circuit in a micro-amplifier used in inputting sound. Japanese Utility Model Laid-Open No. 01-137497 and Japanese Patent Laid-Open No. 63-014200 disclose a speech recognition device that notifies a speaker of the sound level by some appropriate means, and encourages the speaker to speak in an optimum sound level.

However, by the speech recognition device disclosed by Japanese Utility Model Laid-Open No. 59-60700, unwanted noises other than speech are amplified by the AGC circuit and the amplified noises could lower the recognition ratio. In addition, input speech has accented parts representing the stress of the words on a word-basis. Therefore, if the input sound level is often amplified or not amplified using the AGC circuit, distortions result in the waveform of the speech amplified substantially to a fixed level. The speech waveform distortions distort the accented part of each word representing the stress of the word, which lowers the recognition ratio.

Meanwhile, by the speech recognition devices disclosed by Japanese Utility Model Laid-Open No. 01-137497 and Japanese Patent Laid-Open No. 63-014200, the sound level input by a speaker might not reach a prescribed value because of changes in the environment or the poor health condition of the speaker. If the speaker speaks in the predetermined sound level, the speech recognition device might not recognize the speech. The level of the speech given by a speaker is for example physical characteristics inherent to the individual, and if the speaker is forced to speak in a different manner, the detected physical characteristic would be different from the original, which could even lower the recognition ratio in the speech recognition.

JP-A-11 212595 discloses a voice processing device where an average sound level for the sound part of an input signal is determined, and gain calculation processing to adjust the input signal to a level suitable for voice recognition is performed on the basis of the determined average sound level.

JP-A-06 337697 discloses a voice recognition device where amplifier gain is increased when voice recognition fails.

Disclosure of Invention

It is an aim of the present invention to provide a speech recognition device, a speech recognition method and a speech recognition program which can improve the speech recognition ratio regardless of the sound level of a speaker.

According to one aspect, the present invention provides a speech recognition device, comprising:

input means arranged to input a digital sound signal;
a sound level estimation means arranged to estimate the sound level of a sound period based on the digital sound signal in a part of said sound period input by said input means;
sound level adjusting means for adjusting the level of the digital sound signal in said sound period input by said input means based on the sound level estimated by said sound level estimation means and a preset target level;
speech recognition means for performing speech recognition based on the digital sound signal adjusted by said sound level adjusting means; and
a non-linear processor arranged to:

inactivate said sound level adjusting means when the sound level estimated by said sound level estimation means is within a predetermined range; and
when the sound level estimated by the sound level estimation means is not in the predetermined range, activate said sound level adjusting means and change the sound level estimated by said sound level estimation means to a predetermined sound level that is within the predetermined range for application to said sound level adjusting means.

In the speech recognition device according to the present invention, a digital sound signal is input by the input means, and the sound level of a sound period is estimated by the sound level estimation means based on the digital sound signal in a prescribed time period of the sound period input by the input means. The level of the digital sound signal in the sound period input by the input means is adjusted based on the sound level estimated by the sound level estimation means and a preset target level, and speech recognition is performed by the speech recognition means based on the digital sound signal adjusted by the sound level adjusting means.

In this case, the sound level of the entire sound period is estimated based on the digital sound signal in a part of the sound period, and the level of the digital sound signal in the sound period is uniformly adjusted based on the estimated sound level and the preset target level. As a result, the accented part of the speech representing the stress of the words uttered by the speaker is not distorted in the speech recognition, which can improve the speech recognition ratio.

The sound level estimation means may estimate the sound level of the sound period based on the digital sound signal in a prescribed time period at the beginning of the sound period input by the input means.

Usually in this case, the sound level of the entire sound period can be determined based on a sound level rising part in a prescribed time period at the beginning of the sound period. Therefore, the sound level is estimated based on the digital sound signal in the prescribed time period at the beginning of the sound period, so that the sound level of the sound period can surely be estimated in a short time period.

The sound level estimation means may estimate the average value of the digital sound signal in a prescribed time period at the beginning of the sound period input by the input means as the sound level of the sound period.

In this case, the sound level of the sound period can more surely be estimated by calculating the average value of the digital sound signal in the prescribed time period at the beginning of the sound period.

The sound level adjusting means may amplify or attenuate the level of the digital sound signal in the sound period input by the input means by an amplification factor determined by the ratio between the preset target level and the sound level estimated by the sound level estimation means.

In this case, the sound level of the sound period can be set to a target level by increasing or attenuating the level of the digital sound signal in the sound period by an amplification factor determined by the ratio between the target level and the estimated sound level.

The speech recognition device may further include a delay circuit that delays the digital sound signal input by the input means so that the digital sound signal input by the input means is applied to the sound level adjusting means together and in synchronization with the sound level estimated by the sound level estimation means.

In this case, the sound level estimation value corresponding to the digital sound signal may be used for adjustment. Thus, the sound level of the sound period can surely be adjusted.

The sound level estimation means may include a sound detector that detects the starting point of sound period input by the input means, a sound level estimator that estimates the sound level of the sound period based on the digital sound signal in a prescribed time period at the beginning of the sound period input by the input means, a hold circuit that holds the sound level estimated by the sound level estimator, and a storing circuit that stores the digital sound signal in the sound period input by the input means in response to the detection by the sound detector and outputs the stored digital sound signal in the sound period to the sound level adjusting means in synchronization with the sound level held in the hold circuit.

In this case, the starting point of the digital sound signal in the sound period input by the input means is detected by the sound detector, and the sound level of the sound period is estimated by the sound level estimator based on the digital sound signal in the prescribed time period at the beginning of the sound period input by the input means. The sound level estimated by the sound level estimator is held by the hold circuit, the digital sound signal in the sound period input by the input means is stored in the storing circuit in response to the detection of the sound detector, and the stored digital sound signal in the sound period is output to the sound level adjusting means in synchronization with the sound level held in the hold circuit.

In this case, the digital sound signal is stored in the storing circuit from the starting point of the sound period, and the sound level estimation value corresponding to the stored digital sound signal is used for adjusting the sound level. Therefore, the digital sound signal can be adjusted to an accurate sound level and the speech recognition ratio can be improved.

The storing circuit may include first and second buffers that alternately store the digital sound signal in the sound period input by the input means and alternately output the stored digital sound signal in the sound period to the sound level adjusting means.

In this case, when long speech including a plurality of words is input, the digital sound signal is stored/output alternately to/from the first and second buffers. Thus, the long speech including a plurality of words can be recognized using the first or second buffer having a small capacity.

The speech recognition means may have a result of speech recognition fed back to the sound level adjusting means, and the sound level adjusting means may change the degree of adjusting the sound level based on the result of speech recognition fed back from the speech recognition means.

In this case, an inappropriate sound level adjustment degree may be more optimized by using the result of the speech recognition once again for adjusting the sound level and changing the degree of adjusting the sound level.

The sound level adjusting means may increase the amplification factor for the sound level when speech recognition by the speech recognition means is not possible.

In this case, the sound level not allowing speech recognition can be adjusted to a sound level which allows speech recognition by increasing the amplification factor.

The speech recognition device includes a non-linear processor that inactivates the sound level adjusting means when the sound level estimated by the sound level estimation means is within a predetermined range, activates the sound level adjusting means when the sound level estimated by the sound level estimation means is not in the predetermined range, and changes the sound level estimated by the sound level estimation means to a sound level within the predetermined range for application to the sound level adjusting means.

In this case, the sound level can be changed to a sound level within the predetermined range and thus adjusted only when the sound level is not in the predetermined range. Thus, the accented part of the speech representing the stress of the words uttered by the speaker can be prevented from being undesirably distorted.

According to another aspect, the present invention provides a speech recognition method, comprising the steps of:

> inputting a digital sound signal;
> estimating the sound level of a sound period based on said input digital sound signal in a part of the sound period;
> adjusting the level of the digital sound signal in said sound period based on said estimated sound level and a preset target level;
> performing speech recognition based on said adjusted digital sound signal; and
> inactivating the step of adjusting the level of the digital sound signal when said estimated sound level is within a predetermined range, and
> when said estimated sound level is not in the predetermined range, activating said adjusting step and changing said estimated sound level to a sound level within said predetermined range for use in adjusting the level of said digital sound signal.

In the speech recognition method according to the present invention, a digital sound signal is input, the sound level of a sound period is estimated based on the digital sound signal in a part of the sound period. The level of the digital sound signal in the sound period is adjusted based on the estimated sound level and a preset target level, and speech recognition is performed based on the adjusted digital sound signal.

In this case, the sound level of the entire sound period is estimated based on the digital sound signal in a part of the sound period, and the level of the digital sound signal in the sound period is uniformly adjusted based on the estimated sound level and a preset target level. As a result, the accented part of the speech representing the stress of the words uttered by the speaker is not distorted in the speech recognition, which can improve the speech recognition ratio.

The step of estimating the sound level may include estimating the sound level of the sound period based on the digital sound signal within a prescribed time period at the beginning of the sound period.

Usually in this case, the sound level of the entire sound period can be determined based on the rising part of the sound level in a prescribed part at the beginning of the sound period. Therefore, The sound level of the sound period can surely be estimated in a short period by estimating the sound level based on the digital sound signal in the prescribed time period at the beginning of the sound period.

The step of estimating the sound level may include estimating the average value of the digital sound signal in the prescribed time period at the beginning of the sound period as the sound level of the sound period.

In this case, the sound level of the sound period can more surely be estimated by calculating the average value of the digital sound signal in the prescribed time period at the beginning of the sound period.

The step of adjusting the level of the digital sound signal may include amplifying or attenuating the level of the digital sound signal in the sound period by an amplification factor determined by the ratio between the preset target level and the estimated sound level.

In this case, the sound level of the sound period can be set to a target level by increasing or attenuating the level of the digital sound signal in the sound period by an amplification factor determined by the ratio between the target level and the estimated sound level.

The speech recognition method further includes the step of delaying the digital sound signal in the sound period so that the digital sound signal is applied together and in synchronization with the estimated sound level to the step of adjusting the level of the digital sound signal.

In this case, the sound level estimation value corresponding to the digital sound signal may be used for adjusting the sound level. Thus, the sound level of the sound period can surely be adjusted.

The step of estimating the sound level includes the steps of detecting the starting point of the digital sound signal in the sound period, estimating the sound level of the sound period based on the digital sound signal in a prescribed time period at the beginning of the sound period, holding the estimated sound level, and storing the digital sound signal in the sound period in response to the detection of the starting point of the digital sound signal and outputting the stored digital sound signal in the sound period in synchronization with the held sound level.

In this case, the starting point of the digital sound signal in the sound period is detected, and the sound level of the sound period is estimated based on the digital sound signal in a prescribed time period at the beginning of the sound period. The estimated sound level is held, the digital sound signal in the sound period is stored in response to the detection of the starting point of the digital sound signal in the sound period and the stored digital sound signal in the sound period is output in synchronization with the held sound level.

In this case, the digital sound signal is stored in the storing circuit from the starting point of the sound period, and the sound level is adjusted using the sound level estimation value corresponding to the stored digital sound signal. Thus, the sound level can be adjusted to an accurate sound level, which can improve the speech recognition ratio.

The storing step includes the step of storing the digital sound signal in the sound period alternately to first and second buffers and outputting the stored digital sound signal in the sound period alternately from the first and second buffers.

In this case, when long speech including a plurality of words is input, the digital sound signal is stored/output alternately to/from the first and second buffers. Thus, the long speech including a plurality of words can be recognized using the first or second buffer having a small capacity.

The step of performing the speech recognition may include the step of feeding back a result of speech recognition during the step of adjusting the level of the digital sound signal, and the step of adjusting the level of the digital sound signal may include changing the degree of adjusting the sound level based on the fed back result of speech recognition.

In this case, only an inappropriate sound level adjustment degree may be more optimized by using the result of the speech recognition once again for adjusting the sound level and changing the degree of adjusting sound level.

The step of adjusting the level of the digital sound signal may include increasing the amplification factor for the sound level when the speech recognition is not possible.

In this case, the sound level not allowing speech recognition can be adjusted to a sound level which allows speech recognition by increasing the amplification factor for the sound level.

The speech recognition method includes the step of inactivating the step of adjusting the level of the digital sound signal when the estimated sound level is within a predetermined range, while activating the adjusting step when the estimated sound level is not in the predetermined range, and changing the estimated sound level to a sound level within the predetermined range for use in adjusting the level of the digital sound signal.

In this case, the sound level can be changed to a sound level within the predetermined range and thus adjusted only when the sound level is not in the predetermined range. Thus, the accented part of the speech representing the stress of the words uttered by the speaker can be prevented from being undesirably distorted.

According to another aspect, the present invention provides a computer-readable speech recognition program enabling a computer to execute the steps of:

inputting a digital sound signal;
estimating the sound level of a sound period based on the input digital sound signal in a part of said sound period;

adjusting the level of said input digital sound signal in said sound period based on said estimated sound level and a preset target level;

performing speech recognition based on said adjusted digital sound signal; and

inactivating the step of adjusting the level of the digital sound signal when said estimated sound level is within a predetermined range, and

when said estimated sound level is not in the predetermined range, activating said adjusting step and changing said estimated sound level to a sound level within said predetermined range for use in adjusting the level of said digital sound signal.

In the speech recognition program according to the present invention, the digital sound signal is input and the sound level of a sound period is estimated based on the input digital sound signal in a predetermined time period of the sound period. The level of the input digital sound signal in the sound period is adjusted based on the estimated sound level and a preset target value, and speech recognition is performed based on the adjusted digital sound signal.

In this case, the sound level of the entire sound period is estimated based on the digital sound signal in a part of the sound period, and the level of the digital sound signal in the sound period is uniformly adjusted based on the estimated sound level and the preset target level. As a result, the accented part of the speech representing the stress of the words uttered by the speaker is not distorted in the speech recognition. This can increase the speech recognition ratio.

According to the present invention, the sound level of the entire sound period is estimated based on the digital sound signal in a part of the sound period, and the level of the digital sound signal in the sound period is uniformly adjusted based on the estimated sound level and a preset target level. As a result, the accented part of the speech representing the stress of the words uttered by the speaker is not distorted in the speech recognition. This can increase the speech recognition ratio.

Brief Description of the Invention

Fig. 1 is a block diagram of a first speech recognition device to which the present invention may be applied;

Fig. 2 is a block diagram of the configuration of a computer to execute a speech recognition program;

Fig. 3 is a waveform chart showing the speech spectrum of a word *"ragubi"* uttered by a speaker;

Fig. 4 is a block diagram of a second speech recognition device to which the present invention may be applied;

Fig. 5(a) is a waveform chart for the output of a microphone in Fig. 4, while Fig. 5(b) is a graph showing the ratio of the sound signal (signal component) to noise component;

Fig. 6 is a flowchart showing the operation of a sound detector shown in Fig. 4;

Fig. 7 is a schematic diagram showing input/output of a digital sound signal to/from buffers when a speaker utters two words;

Fig. 8 is a block diagram showing a third example of a speech recognition device to which the present invention may be applied;

Fig. 9 is a flowchart for use in illustration of the operation of the sound level adjusting feedback unit shown in Fig. 8 when the sound level is adjusted;

Fig. 10 is a block diagram showing an example of a speech recognition device according to an embodiment of the present invention;

Fig. 11 is a graph for use in illustration of the relation between a sound level estimation value input to a signal non-linear processor and the recognition ratio in the speech recognition unit in Fig. 10;

Fig. 12 is a flowchart for use in illustration of the processing operation of the signal non-linear processor; and

Fig. 13 is a schematic graph showing an example of the relation between the sound level and the recognition ratio in the speech recognition.

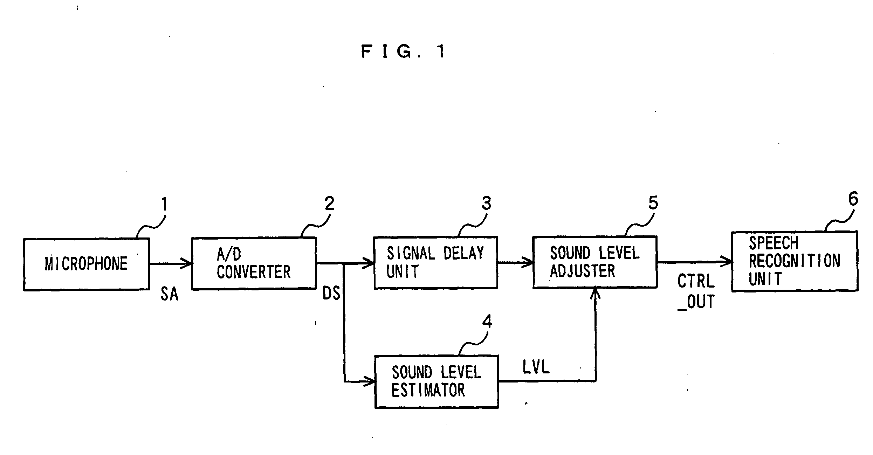

Fig. 1 is a block diagram of an example of a speech recognition device to which the present invention may be applied.

As shown in Fig. 1, the speech recognition device includes a microphone 1, an A/D (analog-digital) converter 2, a signal delay unit 3, a sound level estimator 4, a sound level adjuster 5 and a speech recognition unit 6.

As shown in Fig. 1, speech issued by a speaker is collected by the microphone 1. The collected speech is converted into an analog sound signal SA by the function of the microphone 1 for output to the A/D converter 2. The A/D converter 2 converts the applied analog signal SA into a digital sound signal DS for output to the signal delay unit 3 and the sound level estimator 4. The sound level estimator 4 calculates a sound level estimation value LVL based on the applied digital sound signal DS. Herein, the sound level refers to the level of sound power (sound energy). How to calculate the sound level estimation value LVL will later be described.

The signal delay unit 3 applies the digital sound signal DS delayed by a period corresponding to a prescribed sound level rising time TL which will be described to the sound level adjuster 5. The sound level adjuster 5 adjusts the sound level of the digital sound signal DS applied from the signal delay unit 3 in synchronization with the sound level estimation value LVL applied from the sound level estimator 4. The sound level adjuster 5 applies an output CTRL_OUT after the adjustment of the sound level to the speech recognition unit 6. The speech recognition unit 6 performs speech recognition based on the output CTRL_OUT after the adjustment of the sound level applied from the sound level adjuster 5.

In the speech recognition device of Fig. 1, the microphone 1 and the A/D (analog-digital) converter 2 correspond to the input means, the signal delay unit 3 to the delay circuit, the sound level estimator 4 to the sound level estimation means, the sound level adjuster 5 to the sound level adjusting means, and the speech recognition unit 6 to the speech recognition means.

Note that the signal delay unit 3, the sound level estimator 4, the sound level adjuster 5 and the speech recognition unit 6 may be implemented by the signal delay circuit, the sound level estimation circuit, the sound level adjusting circuit and the speech recognition circuit, respectively. Meanwhile, the signal delay unit 3, the sound level estimator 4, the sound level adjuster 5 and the speech recognition unit 6 may be implemented by a computer and a speech recognition program.

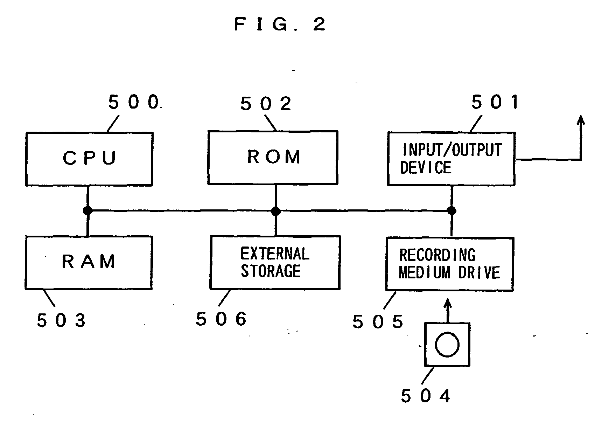

Such a computer to execute the speech recognition program will now be described. Fig. 2 is a block diagram of the configuration of the computer to execute the speech recognition program.

The computer includes a CPU (Central Processing Unit) 500, an input/output device 501, a ROM (Read Only Memory) 502, a RAM (Random Access Memory) 503, a recording medium 504, a recording medium drive 505, and an external storage 506.

The input/output device 501 transmits/receives information to/from other devices. The digital sound signal DS from the A/D converter 2 in Fig. 1 is input to the input/output device 501 according to the embodiment. The ROM 502 is recorded with system programs. The recording medium drive 505 is of a CD-ROM drive, a floppy disc drive, or the like and reads/writes data from/to a recording medium 504 such as a CD-ROM and a floppy disc. The recording medium 504 is recorded with speech recognition programs. The external storage 506 is of a hard disc and the like and is recorded with a speech recognition program read from the recording medium 504 through the recording medium drive 505. The CPU 500 executes the speech recognition program stored in the external storage 506 on the RAM 503. Thus, the functions of the signal delay unit 3, the sound level estimator 4, the sound level adjuster 5 and the speech recognition unit 6 in Fig. 1 are executed.

Now, a method of calculating the sound level estimation value LVL by the sound level estimator 4 in Fig. 1 and a method of adjusting the sound level by the sound level adjuster 5 will be described.

The method of calculating the sound level estimation value LVL by the sound level estimator 4 will be described first. The digital sound signal DS input to the sound level estimator 4 is represented as DS(x)(x=1, 2, ..., Q) where x indicates Q time points in the rising time TL for a predetermined sound level, and DS(x) indicates the value of the digital sound signal DS at the Q time points. In this case, the sound level estimation value LVL is expressed as follows:

$$\text{LVL} = (\Sigma \, | \, \text{DS} \, (\text{x}) \, | \, )/\text{Q} \qquad \qquad ...(1)$$

In the expression (1), the sound level estimation value LVL is the average value produced by dividing the cumulative sum of the absolute values of the digital sound signal DS (x) at the Q time points in the rising time TL of the predetermined sound level by Q. Thus, the sound level estimation value LVL is calculated in the sound level estimator 4.

Now, the method of adjusting the sound level by the sound level adjuster 5 will now be described. In the sound level adjuster 5, a target value for a predetermined sound level is indicated as TRG_LVL. In this case, the adjusted value for the sound level LVL_CTRL is expressed as follows:

$$\text{LVL\_CTRL} = \text{TGR\_LVL}/\text{LVL} \qquad \qquad ...(2)$$

In the expression (2), the adjusted value LVL_CTRL for the sound level is calculated by dividing the target value TRG_LVL for the predetermined sound level by the sound level estimation value LVL.

The output CTRL_OUT after the adjustment of the sound level is expressed using the adjusted value LVL_CTRL for the sound level as follows:

$$CTRL\_OUT(X)=DS(X)\times LVL\_CTRL \qquad\qquad ...(3)$$

where X represents time. In the expression (3), the output CTRL_OUT(X) after the adjustment of the sound level is produced by multiplying the digital sound signal DS(X) at a predetermined sound level rising time TL by the adjusted value LVL_CTRL for the sound level. Thus, the sound level adjuster 5 adjusts the sound level and applies the resulting output CTRL_OUT (X) to the speech recognition unit 6.

The predetermined rising time TL for the sound level in the signal delay unit 3 shown in Fig. 1 will now be described in conjunction with the drawings.

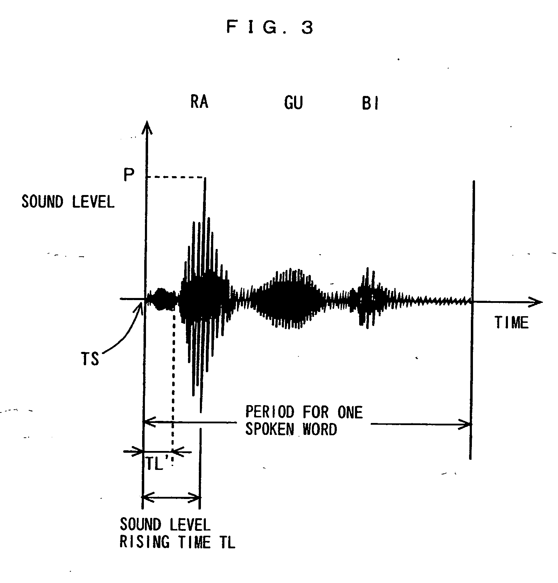

Fig. 3 is a waveform chart showing the speech spectrum of a word *"ragubi"* uttered by a speaker. In Fig. 3, the ordinate represents the sound level, while the abscissa represents time.

As shown in Fig. 3, in the speech spectrum of the word *"ragubi,"* the sound level of the "*ra*" part is high. More specifically, the high point in the sound level corresponds to the part where the accent representing the stress of each word lies. Here, as shown in Fig. 3, the time from the starting point TS when a word is uttered by the speaker to the time point when the peak value P of the sound level is reached is the sound level rising time TL. In general, the sound level rising time TL is in the range from 0 sec to 100 msec, and the sound level rising time TL according to the embodiment of the invention is for example 100 msec.

If for example the sound level rising time TL is set to a shorter period, the speech recognition ratio is lowered. As shown in Fig. 3, assume that the speaker utters the word *"ragubi,"* and a shorter sound level rising time denoted by TL' is set. In this case, simply delaying the digital sound signal DS input to the signal delay unit 3 shown in Fig. 1 by the rising time TL' does not allow an appropriate sound level estimation value LVL to be calculated by the sound level estimator 4. A sound level estimation value lower than the intended target sound level estimation value LVL is produced. Then, the sound level estimation value lower than the target value is provided to the sound level adjuster 5, and the sound level value of the digital sound signal DS is adjusted incorrectly by the sound level adjuster 5. Thus, the incorrect digital sound signal DS is input to the speech recognition unit 6, which lowers the speech recognition ratio.

As described above, the sound level rising time TL at the beginning of a sound period is set to 100 msec at the signal delay unit 3, so that the sound level of the entire sound period can be calculated by the sound level estimator 4. Thus, the level of the digital sound signal DS of the sound period is uniformly adjusted. As a result, the accented part of the speech representing the stress of the words uttered by the speaker is not distorted in the speech recognition, which increases the speech recognition ratio.

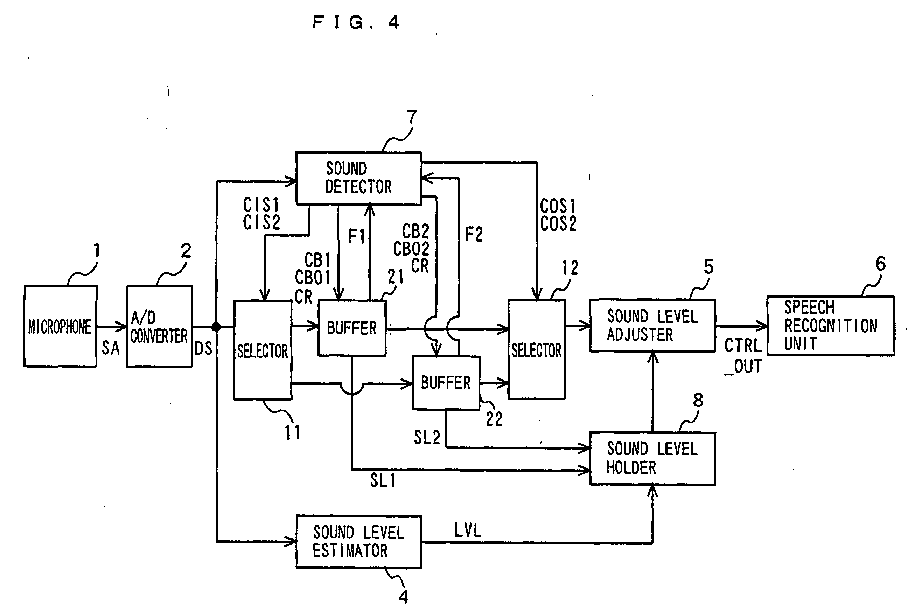

Fig. 4 is a block diagram of a second speech recognition device to which the present invention may be applied.

As shown in Fig. 4, the speech recognition device includes a microphone 1, an A/D converter 2, a sound level estimator 4, a sound level adjuster 5, a speech recognition unit 6, a sound detector 7, a sound level holder 8, selectors 11 and 12, and buffers 21 and 22.

As shown in Fig. 4, speech issued by a speaker is collected by the microphone 1. The collected speech is converted into an analog sound signal SA by the function of the microphone 1 for output to the A/D converter 2. The A/D converter 2 converts the applied analog sound signal SA into a digital sound signal DS for application to the sound level estimator 4, the sound detector 7, and the selector 11. The sound level estimator 4 calculates the sound level estimation value LVL based on the applied digital sound signal DS. The method of calculating the sound level estimation value LVL by the sound level estimator 4 in Fig. 4 is the same as the method of calculating the sound sound level estimation value LVL by the sound level estimator 4 in Fig. 1.

The sound level estimator 4 calculates a sound level estimation value LVL for each word based on the digital sound signal DS applied from the A/D converter 2, and sequentially applies the resulting sound level estimation value LVL to the sound level holder 8. Here, the sound level holder 8 holds the previous sound level estimation value LVL in a holding register provided in the sound holder 8 until the next sound level estimation value LVL calculated by the sound level estimator 4 is applied and overwrites each new sound level estimation value LVL applied from the sound level estimator 4 in the holding register holding the previous sound level estimation value LVL. The holding register has a data capacity M.

Meanwhile, the sound detector 7 detects the starting point TS of the sound in Fig. 3 based on the digital sound signal DS applied from the A/D converter 2, and applies a control signal CIS1 to the selector 11 so that the digital sound signal DS is applied to the buffer 21, and a control signal CB1 to the buffer 21 so that the digital sound signal DS applied from the selector 11 is stored therein. The buffers 21 and 22 both have a capacity L.

The selector 11 applies the digital sound signal DS applied from the A/D converter 2 to the buffer 21 in response to the control signal CIS1 applied from the sound detector 7. The buffer 21 stores the digital sound signal DS applied through the selector 11 in response to the control signal CB1 applied from the sound detector 7. Thè buffer 21 applies a full signal F1 to the sound detector 7 when it has stored the digital sound signal DS as much as the storable capacity L. Thus, the sound detector 7 applies a control signal SL1 to cause the sound level holder 8 to output the sound level estimation value LVL through the buffer 21.

The sound detector 7 applies a control signal CIS2 to the selector 11 in response to the full signal F1 applied from the buffer 21 so that the digital sound signal DS applied from the A/D converter 2 is applied to the buffer 22 and a control signal CB2 to the buffer 22 so that the digital sound signal DS applied from the selector 11 is stored therein. In addition, the sound detector 7 applies a control signal CBO1 to the buffer 21 and a control signal COS1 to the selector 12.

The selector 11 applies the digital sound signal DS applied from the A/D converter 2 to the buffer 22 in response to the control signal CIS2 applied from the sound detector 7. The buffer 22 stores the digital sound signal DS applied through the selector 11 in response to the control signal CB2 applied from the sound detector 7.

Meanwhile, the buffer 21 applies the digital sound signal DS stored in the buffer 21 to the sound level adjuster 5 through the selector 12 in response to the control signal CBO1 applied from the sound detector 7.

The buffer 22 stores the digital sound signal DS applied through the selector 11 in response to the control signal CB2 applied from the sound detector 7. The buffer 22 applies the full signal F2 to the sound detector 7 when it has stored the digital sound signal DS as much as its storable capacity L. Thus, the sound detector 7 applies a control signal SL2 through the buffer 22 to cause the sound level holder 8 to output the sound level estimation value LVL.

The sound detector 7 applies the control signal CIS1 to the selector 11 in response to the full signal F2 applied from the buffer 22 so that the digital sound signal DS applied from the A/D converter 2 is applied to the buffer 21. The sound detector 7 applies a control signal CBO2 to the buffer 22 and a control signal COS2 to the selector 12.

Meanwhile, the buffer 22 applies the digital sound signal DS stored in the buffer 22 to the sound level adjuster 5 through the selector 12 in response to the control signal CBO2 applied from the sound detector 7.

The sound level holder 8 applies the sound level estimation value LVL held by the holding register inside to the sound level adjuster 5 in response to the control signal SL1 applied from the buffer 21 or the control signal SL2 applied from the buffer 22. Here, the capacity M of the holding register provided in the sound level holder 8 and the capacity L of the buffers 21 and 22 are substantially the same, and therefore the sound level estimation value LVL corresponding to the digital sound signal DS applied through the selector 12 is output from the sound level holder 8.

The sound level adjuster 5 adjusts the digital sound signal DS obtained through the selector 12 based on the sound level estimation value LVL applied from the sound level holder 8. The method of adjusting the digital sound signal DS by the sound level adjuster 5 in Fig. 4 is the same as the method of adjusting the digital sound signal DS by the sound level adjuster 5 in Fig. 1. The sound level adjuster 5 applies the sound level adjusted output CTRL_OUT to the speech recognition unit 6. The speech recognition unit 6 performs speech recognition based on the sound level adjusted output CTRL_OUT applied from the sound level adjuster 5.

In the speech recognition device of Fig. 4. the microphone 1 and the A/D (analog-digital) converter 2 correspond to the input means, the sound level estimator 4 to the sound level estimation means, the sound level adjuster 5 to the sound level adjusting means, the speech recognition unit 6 to the speech recognition means, the speech detector 7 to the sound detector, the sound level holder 8 to the hold circuit, and the buffers 21 and 22 to the storing circuit.

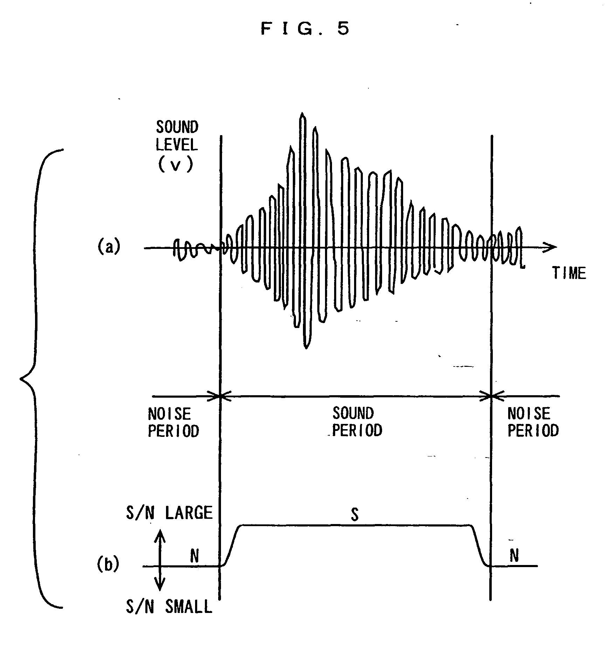

Fig. 5(a) is a waveform chart for the output of the microphone 1 in Fig. 4, while Fig. 5(b) is a graph showing the ratio of the sound signal (signal component) S to noise component N (S/N).

As shown in Fig. 5(a), the output waveform of the microphone 1 consists of the noise component and the sound signal. The sound period including the sound signal has a high sound level value in the output waveform.

As shown in Fig. 5(b), the sound detector 7 in Fig. 4 determines any period having a low S/N ratio, the ratio of the sound signal (speech component) to the noise component as a noise period, while the detector determines any period having a high S/N ratio as a sound period.

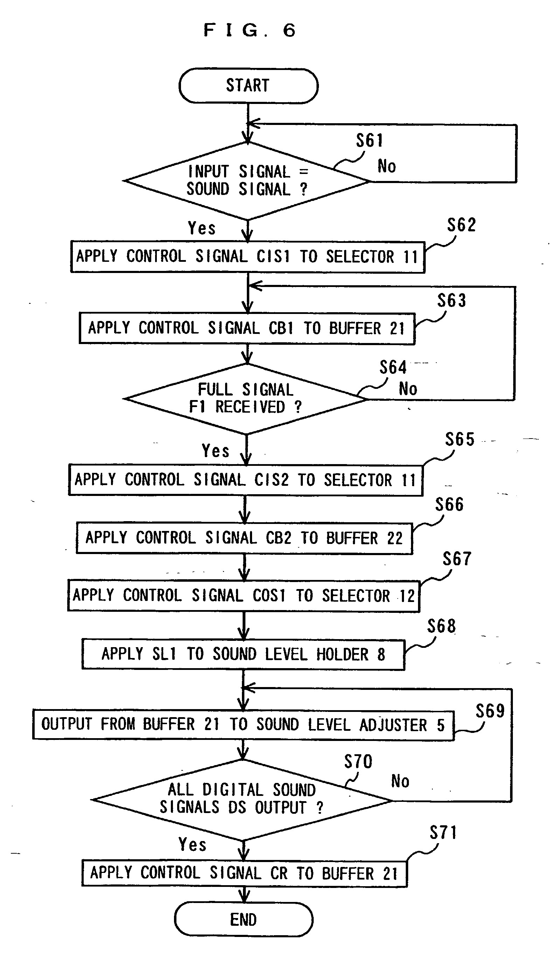

Fig. 6 is a flowchart showing the operation of the sound detector 7 shown in Fig. 4.

As shown in Fig. 6, the sound detector 7 determines whether or not the input digital sound signal DS is a sound signal (step S61). If the input digital sound signal DS is not a sound signal, the sound detector 7 stands by until the following digital sound signal DS input is determined as a sound signal. Meanwhile, if the input digital sound signal DS is determined as a sound signal, the sound detector 7 applies the control signal CIS1 to the selector 11 in Fig. 4 so that the digital sound signal DS applied to the selector 11 is applied to the buffer 21 (step S62). The sound detector 7 applies the control signal CB1 to the buffer 21 so that the digital sound signal DS is stored in the buffer 21 (step S63).

The sound detector 7 then determines whether or not the full signal F1 which is output when the digital sound signal DS as much as the storable capacity L by the buffer 21 has been stored is received (step S64). The sound detector 7 repeats the step S63 before the full signal F1 is not received from the buffer 21. Meanwhile, the sound detector 7 applies the control signal CIS2 to the selector 11 in Fig. 4 in response to the full signal F1 received from the buffer 21 so that the digital sound signal DS applied to the selector 11 is applied to the buffer 22 (step S65). The sound detector 7 applies the control signal CB2 to the buffer 22 so that the buffer 22 stores the digital sound signal DS (step S66). The sound detector 7 outputs the control signals CIS2 and CB2, and then applies the control signal COS1 to the selector 12 so that the stored digital sound signal DS applied from the buffer 21 is applied to the sound level adjuster 5 (step S67).

The sound detector 7 then applies the control signal SL1 to the sound level holder 8 through the buffer 21 (step S68). The sound level holder 8 applies to the sound level adjuster 5 the sound level estimation value LVL repeatedly stored in the holding register in the sound level holder 8 in response to the control signal SL1 applied through buffer 21.

Then, the sound detector 7 applies the control signal CBO1 to the buffer 21, so that the stored digital sound signal DS is output to the sound level adjuster 5 (step S69). The sound detector 7 then determines whether or not the digital sound signal DS stored in the buffer 21 is entirely output to the sound level adjuster 5 (step S70). Here, if the digital sound signal DS is not entirely output from the buffer 21, the control signal CBO1 is once again applied to the buffer 21, so that the stored digital sound signal DS is output to the sound level adjuster 5. Meanwhile, when the digital sound signal DS stored in the buffer 21 is entirely output, the sound detector 7 applies a control signal CR to the buffer 21 so that the data in the buffer is erased (cleared) (step S71).

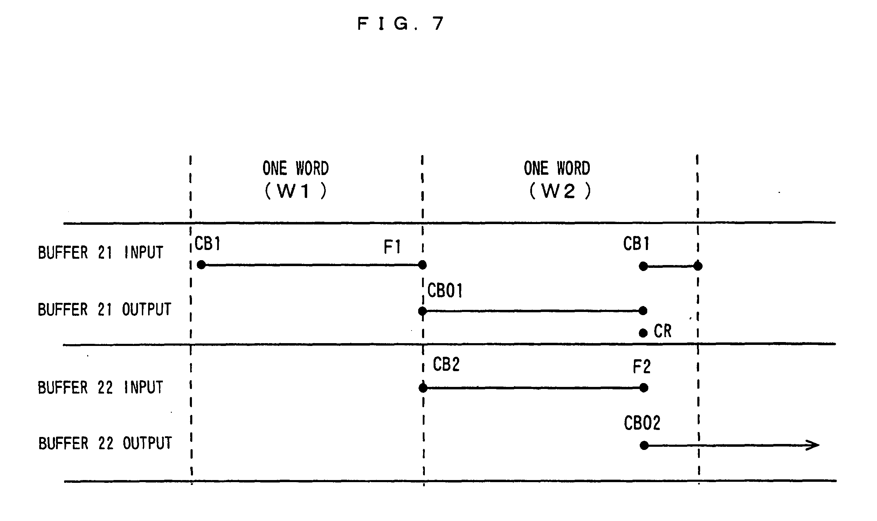

Fig. 7 is a schematic chart showing input/output of the digital sound signal DS to/from the buffers 21 and 22 when a speaker utters two words.

As shown in Fig. 7, the buffer 21 is provided with the control signal CB1 from the sound detector 7 at the beginning of one word W1 in a sound period S, so that the digital sound signal DS starts to be input to the buffer 21. Herein, the buffers 21 and 22 are FIFO (First In First Out) type memories, and have substantially the same memory capacity L.

The digital sound signal DS is input to the buffer 21 for almost the entire one word W1, and once the digital sound signal DS as much as the capacity L storable in the buffer 21 has been stored, the buffer 21 outputs the full signal F1 to the sound detector 7. The buffer 21 outputs the full signal F1 and then outputs the digital sound signal DS stored in buffer 21 in response to the control signal CBO1 applied from the sound detector 7. Meanwhile, the buffer 22 starts to store the digital sound signal DS in response to the control signal CB2 applied from the sound detector 7.

The buffer 22 outputs the full signal F2 to the sound detector 7 when the digital sound signal DS as much as its storable capacity L has been stored. Meanwhile, the digital sound signal DS stored in the buffer 21 during the storing of the signal in the buffer 22 is entirely output to the sound level adjuster 5 and then the data in the buffer 21 is all erased (cleared) in response to the control signal CR applied from the sound detector 7. Thus, the control signal CB1 to cause the digital sound signal DS to be once again stored is applied to the buffer 21 from the sound detector 7.

As described above, the digital sound signal is stored from the starting point of a sound period, and a sound level estimation value corresponding to the stored digital sound signal may be used to accurately adjust the sound level. As a result, the speech recognition can be adjusted based on the accurate sound level, so that the speech recognition ratio can be improved.

If a digital sound signal DS for a long period including a plurality of words is input, storing and output operations can alternatively be performed. In this way, the speech recognition can be performed using a buffer having only a small capacity.

Note that while the buffers are used according to the embodiment of the invention, storing circuits of other kinds may be used. Furthermore, the buffer may be provided with a counter inside, and the counter in the buffer may be monitored by the sound detector 7, and the full signal F1 or F2 or the control signal CR may be output.

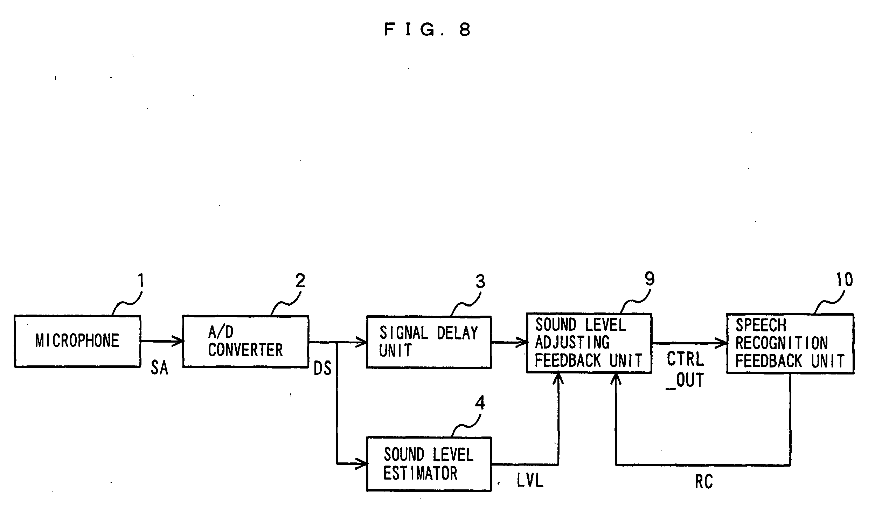

Fig. 8 shows a speech recognition device that includes a microphone 1, an A/D (analog-digital) converter 2, a signal delay unit 3, a sound level estimator 4, a sound level adjusting feedback unit 9, and a speech recognition feedback unit 10.

As shown in Fig. 8, speech issued by a speaker is collected by the microphone 1. The collected speech is converted into an analog sound signal SA by the function of the microphone 1 for output to the A/D converter 2. The A/D converter 2 converts the analog sound signal SA into a digital sound signal DS for application to the signal delay unit 3 and the sound level estimator 4. The sound level estimator 4 calculates a sound level estimation value LVL based on the applied digital sound signal DS. Here, the method of calculating the sound level estimation value LVL by the sound level estimator 4 in Fig. 8 is the same as the method of calculating the sound level estimation value LVL by the sound level estimator 4 in Fig. 1.

The sound level estimator 4 calculates the sound level estimation value LVL for application to the sound level adjusting feedback unit 9. The sound level adjusting feedback unit 9 adjusts the level of the digital sound signal DS applied from the signal delay unit 3 based on and in synchronization with the sound level estimation value LVL applied from the sound level estimator 4. The sound level adjusting feedback unit 9 applies to the speech recognition feedback unit 10 an output CTRL_OUT after the adjustment of the sound level. The speech recognition feedback unit 10 performs speech recognition based on the adjusted output CTRL_OUT applied from the sound level adjusting feedback unit 9, and applies the sound level control signal RC to the sound level adjusting feedback unit 9 when the speech recognition is not successful. The operation of the sound level adjusting feedback unit 9 and speech recognition feedback unit 10 will be described later.

In the speech recognition device of Fig. 8, the microphone 1 and the A/D (analog-digital) Log-digital) converter 2 correspond to the input means, the signal delay unit 3 to the delay circuit, the sound level estimator 4 to the sound level estimation means, the sound level adjusting feedback unit 9 to the sound level adjusting means, and the speech recognition feedback unit 10 to the speech recognition means.

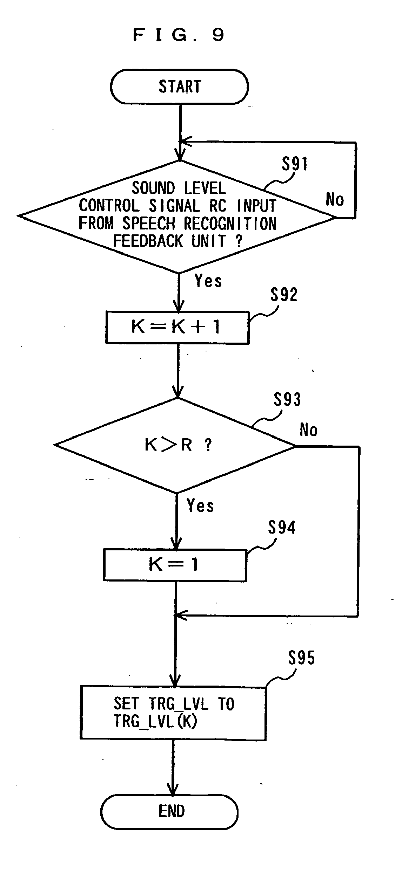

Fig. 9 is a flowchart for use in illustration of the operation of the sound level adjusting feedback unit 9 shown in Fig. 8 when the sound level is adjusted.

As shown in Fig. 9, the sound level adjusting feedback unit 9 determines whether or not the sound level control signal RC by the speech recognition feedback unit 10 is input (step S91). If the sound level control signal RC is not input by the speech recognition feedback unit 10, the sound level adjusting feedback unit 9 stands by until it is determined that the sound level control signal RC is input from the speech recognition feedback unit 10. Meanwhile, if it is determined that the sound level control signal RC is input from the speech recognition feedback unit 10, the sound level adjusting feedback unit 9 adds 1 to the variable K (step S92).

Here, sound level target values in a plurality of levels are preset, and the variable K represents the number of the levels. According to the third embodiment, the variable K has a value in the range from 1 to R, and the sound level target value TRG_LVL(K) can be TRG_LVL(1), TRG_LVL(2),..., or TRG_LVL(R).

The sound level adjusting feedback unit 9 then determines whether or not the variable K is larger than the maximum value R (step S93). Here, the sound level adjusting feedback unit 9 determines that the variable K is larger than the maximum value R, the sound level adjusting feedback unit 9 returns the variable K to the minimum value 1 (step S94), and sets the sound level target value TRG_LVL to TRG_LVL(1) (step S95).

Meanwhile, if the sound level adjusting feedback unit 9 determines that the variable K is the maximum value R or less, the sound level adjusting feedback unit 9 sets the sound level target value TRG_LVL to TRG_LVL(K)(step S95).

Assume that the sound level target value TRG_LVL is initially set for example to TRG_LVL(2). If then the speech recognition feedback unit 10 has failed to recognize speech or speech recognition is unsuccessful, the control signal RC is output to the sound level adjusting feedback unit 9. The sound level adjusting feedback unit 9 changes the sound level target value TRG_LVL(2) to the sound level target value TRG_LVL(3), and waits for speech input again from the speaker.

In this way, the sound level target value TRG_LVL is sequentially changed to the sound level target value TRG_LVL(2), TRG_LVL(3) and TRG_LVL(4), and when the speech recognition is successfully performed, the sound level target value TRG_LVL at the time is fixed. If the sound level target value TRG_LVL is set to the maximum value TRG_LVL(R), and still the speech recognition is not successful, the sound level target value TRG_LVL is returned to the minimum value TRG_LVL(1), and speech input again from the speaker is waited.

Thus, the sound level target value TRG_LVL is set to the optimum value for speech recognition.

As described above, when the speech recognition is not successfully performed, the degree of the sound level adjustment can sequentially be raised again by the sound level adjusting feedback unit 9. If the sound level is adjusted to the degree of the predetermined maximum sound level value, the sound level can be returned to the minimum level and once again the degree of adjustment can sequentially be raised. Thus, when the speech recognition is not successful because the degree of sound level adjustment is not appropriate, the degree can repeatedly and sequentially be changed, so that the speech recognition ratio can be improved.

Note that according to the above description after unsuccessful speech recognition, the target value TRG_LVL (K) for the sound level is sequentially changed based on speech input again from the speaker. Meanwhile, the invention is not limited to this, and means for holding speech input may be provided and upon unsuccessful speech recognition, the speech input held by the speech input holding means may be used to sequentially change the sound level target TRG_LVL(K).

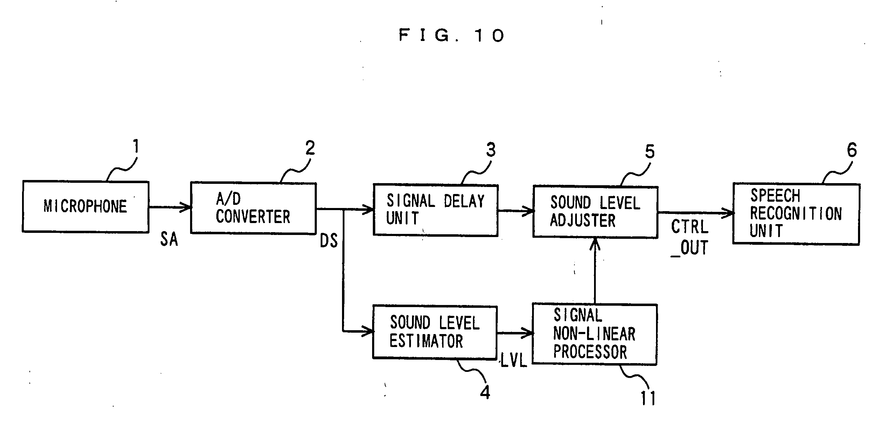

Fig. 10 is a block diagram showing an example of a speech recognition device according to an embodiment of the : the present invention.

As shown in Fig. 10, the speech recognition device includes a microphone 1, an A/D(analog-digital) converter 2, a signal delay unit 3, a sound level estimator 4, a sound level adjuster 5, a speech recognition unit 6 and a signal non-linear processor 11.

As shown in Fig. 10, speech issued by a speaker is collected by the microphone 1. The collected speech is converted into an analog sound signal SA by the function of microphone 1 for output to the A/D converter 2. The A/D converter 2 converts the analog sound signal SA into a digital sound signal DS for application to the signal delay unit 3 and the sound level estimator 4. The sound level estimator 4 calculates a sound level estimation value LVL based on the applied digital sound signal DS. Here, the method of calculating the sound level estimation value LVL by the sound level estimator 4 according to the embodiment is the same as the method of calculating the sound level estimation value LVL by the sound level estimator 4 in Fig . 1. The sound level estimator 4 applies the digital sound signal DS and the sound level estimation value LVL to the signal non-linear processor 11. The signal non-linear processor 11 performs non-linear processing as will be described based on the sound level estimation value LVL applied from the sound level estimator 4, and applies the sound level estimation value LVL after the non-linear processing to the sound level adjuster 5.

Meanwhile, the signal delay unit 3 applies the digital sound signal DS delayed by a period corresponding to the sound level rising time TL to the sound level adjuster 5. Here, the delay corresponding to the sound level rising time TL according to the embodiment is 100 msec. The sound level adjuster 5 performs the sound level adjustment of the digital sound signal DS applied from the signal delay unit 3 based on the sound level estimation value LVL applied from the signal non-linear processor 11. The sound level adjuster 5 applies the sound level adjusted output CTRL_OUT to the speech recognition unit 6. The speech recognition unit 6 performs speech recognition based on the sound level adjusted output CTRL_OUT applied from the sound level adjuster 5.

In the speech recognition device according to the embodiment, the microphone 1 and the A/D (analog-digital) converter 2 correspond to the input means, the signal delay unit 3 to the delay circuit, the sound level estimator 4 to the sound level estimation means, the sound level adjuster 5 to the sound level adjusting means, the speech recognition unit 6 to the speech recognition means, and the signal non-linear processor 11 to the non-linear processor.

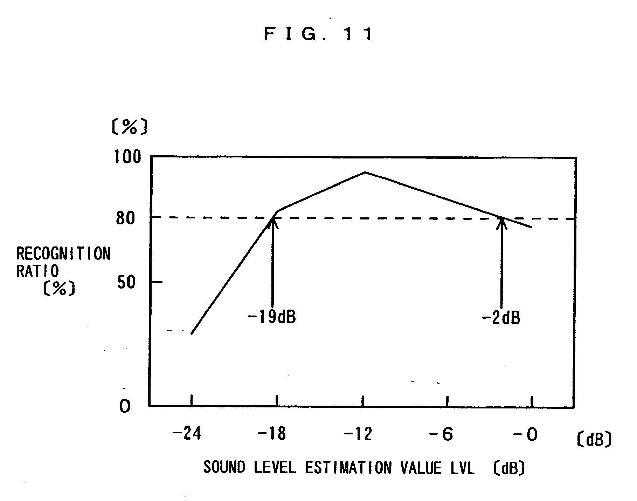

Fig. 11 is a graph for use in illustration of the relation between the sound level estimation value LVL input to the signal non-linear processor 11 in Fig. 10 and the recognition ratio in the speech recognition unit 6 in Fig. 10.

As shown in Fig. 11, the recognition ratio in the speech recognition unit 6 in Fig. 10 depends on the sound level estimation value LVL. When the sound level estimation value LVL is in the range from -19 dB to -2 dB, the recognition ratio is 80% or more. When the sound level estimation value LVL is particularly low (at most -19 dB) or high (at least -2 dB), the speech recognition ratio abruptly drops.

Consequently, in the signal non-linear processor 11 according to the embodiment of the invention, the input sound level estimation value LVL is adjusted to be in the range from -19 dB to -2 dB.

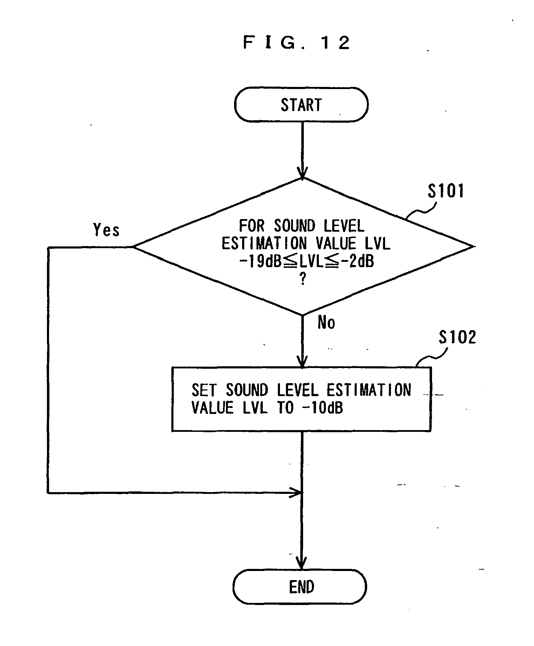

Fig. 12 is a flowchart for use in illustration of the processing operation of the signal non-linear processor 11.

As shown in Fig. 12, the signal non-linear processor 11 determines whether or not the sound level estimation value LVL input from the sound level estimator 4 is in the range from -19 dB to -2 dB (step S101).

When the signal non-linear processor 11 determines that the input sound level estimation value LVL is from -19 dB to -2 dB, the sound level adjuster 5 is inactivated. More specifically, in the sound level adjuster 5, the sound level adjusting value LVL_CTRL is 1 in the expression (2) in this case.

Meanwhile, when the signal non-linear processor 11 determines that the input sound level estimation value LVL is not in the range from -19 dB to -2 dB, the sound level estimation value LVL is set to -10 dB (step S102).

As described, the signal non-linear processor 11 sets the sound level estimation value LVL to allow the recognition ratio to be at least 80%, and therefore the recognition ratio of the input digital sound signal DS in the speech recognition unit 6 can be improved. More specifically, only when the sound level estimation value LVL is not in the predetermined range, the sound level estimation value is changed to a sound level estimation value within the predetermined range for adjusting the sound level. Meanwhile, when the sound level estimation value is within the predetermined range, the amplification factor is set to 1 in the sound level adjuster 5 to inactivate the sound level adjuster 5, so that the sound level is not adjusted. Thus, speech recognition can readily be performed without undesirably distorting the accented part of the speech representing the stress of the words uttered by the speaker, so that the recognition ratio can be improved.

Note that in the above embodiment, the sound level estimation value is adjusted within the range from -19 dB to -2 dB, while the invention is not limited to this, and the value may be adjusted to a preset sound level estimation value in the speech recognition or a sound level estimation value which allows a higher recognition ratio.

**Claims**

1.  A speech recognition device, comprising:

   input means (1, 2) arranged to input a digital sound signal;
   a sound level estimation means (4) arranged to estimate the sound level of a sound period based on the digital sound signal in a part of said sound period input by said input means (1, 2);
   sound level adjusting means (5) arranged to adjust the level of the digital sound signal in said sound period input by said input means (1, 2) based on the sound level estimated by said sound level estimation means (4) and a preset target level;
   speech recognition means (6) arranged to perform speech recognition based on the digital sound signal adjusted by said sound level adjusting means (5); and **characterised by**:

      a non-linear processor (11) arranged to:

         inactivate said sound level adjusting means (5) when the sound level estimated by said sound level estimation means (4) is within a predetermined range; and
         when the sound level estimated by the sound level estimation means (4) is not in the predetermined range, activate said sound level adjusting means (5) and change the sound level estimated by said sound level estimation means (4) to a predetermined sound level that is within the predetermined range for application to said sound level adjusting means (5).

2. The speech recognition device according to claim 1, wherein said sound level estimation means (4) is arranged to estimate the sound level of said sound period based on the digital sound signal in a prescribed time period at the beginning of said sound period input by said input means (1, 2).

3. The speech recognition device according to claim 2, wherein said sound level estimation means (4) is arranged to estimate the average value of the digital sound signal in the prescribed time period at the beginning of said sound period input by said input means (1, 2) as the sound level of said sound period.

4. The speech recognition device according to any preceding claim, wherein said sound level adjusting means (5) is arranged to amplify or attenuate the level of the digital sound signal in said sound period input by said input means (1, 2) by an amplification factor determined by the ratio between said preset target level and the sound level estimated by said sound level estimation means (4).

5. The speech recognition device according to any preceding claim, further comprising a delay circuit (3) that delays the digital sound signal input by said input means (1, 2) so that the digital sound signal in said sound period is applied to said sound level adjusting means (5) together and in synchronization with the sound level estimated by sound level estimation means (4).

6. The speech recognition device according to any preceding claim, wherein said sound level estimation means (4) includes:

   a sound detector (7) that detects the starting point of the digital sound signal in said sound period input by said input means (1, 2);
   a sound level estimator (4) that estimates the sound level of said sound period based on the digital sound signal in a prescribed time period at the beginning of said sound period input by said input means (1, 2);
   a hold circuit (8) that holds the sound level estimated by said sound level estimator (4); and
   a storing circuit that stores the digital sound signal in said sound period input by said input means in response to the detection by said sound detector and outputs the stored digital sound signal in said sound period to said sound level adjusting means in synchronization with the sound level held in said hold circuit

7. The speech recognition device according to claim 6, wherein said storing circuit includes first and second buffers (21, 22) arranged to alternatively store the digital sound signal in said sound period input by the input by the input means (1, 2) and alternately output the stored digital sound signal in said sound period to said sound level adjusting means (5).

8. The speech recognition device according to any preceding claim, wherein
   said speech recognition means (6) is arranged to feed a result of speech recognition back to said sound level adjusting means (5), and
   said sound level adjusting means (5) is arranged to change the degree of adjustment to said sound level based on the result of speech recognition fed back from said speech recognition means (6).

9. The speech recognition device according to claim 8, wherein said sound level adjusting means (5) is arranged to increase an amplification factor for said sound level when speech recognition by said speech recognition means (6) is not possible.

10. A speech recognition method, comprising the steps of:

   inputting a digital sound signal;
   estimating the sound level of a sound period based on said input digital sound signal in a part of the sound period;
   adjusting the level of the digital sound signal in said sound period based on said estimated sound level and a preset target level;
   performing speech recognition based on said adjusted digital sound signal; and **characterised by**:

      inactivating the step of adjusting the level of the digital sound signal when said estimated sound level is within a predetermined range, and

when said estimated sound level is not in the predetermined range, activating said adjusting step and changing said estimated sound level to a sound level within said predetermined range for use in adjusting the level of said digital sound signal.

**11.** The speech recognition method according to claim 10, wherein said step of estimating the sound level includes estimating the sound level of said sound period based on the digital sound signal within a prescribed time period at the beginning of said sound period.

**12.** The speech recognition method according to claim 11, wherein said step of estimating the sound level includes estimating the average value of the digital sound in the prescribed time period at the beginning of said sound period as the sound level of said sound period

**13.** The speech recognition method according to any of claims 10 to 12, wherein said step of adjusting the level of said digital sound signal includes amplifying or attenuating the level of the digital sound signal in said sound period by an amplification factor determined by the ratio between said preset target level and said estimated sound level.

**14.** The speech recognition method according to any of claims 10 to 13 further comprising the step of delaying the digital sound signal so that said digital sound signal in said sound period is applied together and in synchronization with said estimates sound level to the step of adjusting the level of said digital sound signal.

**15.** The speech recognition method according to any of claims 10 to 14 wherein said step of estimating the sound level includes the steps of:

detecting the starting point of the digital sound signal in said sound period;
estimating the sound level of said sound period based on the digital sound signal in a prescribed time period at the beginning of said sound period;
storing the digital sound signal in said sound period in response to the detection of the starting point of said digital sound signal and outputting said stored digital sound signal in said sound period in synchronization with said held sound level.

**16.** The speech recognition method according to claim 15, wherein said storing step includes the step of storing the digital sound signal in said sound period alternately to first and second buffers and outputting the stored digital sound signal in said sound period alternatively from the first and second buffers.

**17.** The speech recognition method according to any of claims 10 to 16, wherein
said step of performing speech recognition includes the step of feeding back a result of speech recognition during said step of adjusting the level of the digital sound signal, and
said step of adjusting the level of the digital sound signal comprises changing the degree of adjusting said sound level based on said fed back result of speech recognition.

**18.** The speech recognition method according to claim 17, wherein said step of adjusting the level of the digital sound signal comprises increasing the amplification factor for said sound level when said speech recognition is not possible.

**19.** A computer-readable speech recognition program enabling a computer to execute the steps of:

inputting a digital sound signal;
estimating the sound level of a sound period based on the input digital sound signal in a part of said sound period;
adjusting the level of said input digital sound signal in said sound period based on said estimated sound level and a preset target level;
performing speech recognition based on said adjusted digital sound signal; and
inactivating the step of adjusting the level of the digital sound signal when said estimated sound level is within a predetermined range, and
when said estimated sound level is not in the predetermined range, activating said adjusting step and changing said estimated sound level to a sound level within said predetermined range for use in adjusting the level of said digital sound signal.

**Patentansprüche**

1.  Spracherkennungsvorrichtung, umfassend:

    Eingabemittel (1, 2), die zum Eingeben eines digitalen Schallsignals angeordnet sind;
    ein Schallpegel-Schätzmittel (4), das zum Schätzen des Schallpegels einer Schallperiode auf der Grundlage des digitalen Schallsignals in einem Teil der von den Eingabemitteln (1, 2) eingegebenen Schallperiode angeordnet ist;
    ein Schallpegel-Einstellungsmittel (5), das zum Einstellen des Pegels des digitalen Schallsignals in der von den Eingabemitteln (1, 2) eingegebenen Schallperiode auf der Grundlage des vom Schallpegel-Schätzmittel (4) geschätzten Schallpegels und eines vorbestimmten Zielpegels angeordnet ist;
    ein Spracherkennungsmittel (6), das zur Durchführung der Spracherkennung auf der Grundlage des vom Schallpegel-Einstellungsmittel (5) eingestellten digitalen Schallsignals angeordnet ist; und **gekennzeichnet durch** einen nichtlinearen Prozessor (11), der zum
    Deaktivieren des Schallpegel-Einstellungsmittel (5), wenn der vom Schallpegel-Schätzmittel (4) geschätzte Schallpegel innerhalb eines vorbestimmten Bereichs liegt; und
    wenn der vom Schallpegel-Schätzmittel (4) geschätzte Schallpegel nicht innerhalb des vorbestimmten Bereichs liegt, zum Aktivieren des Schallpegel-Einstellungsmittel (5) und zum Ändern des vom Schallpegel-Schätzmittel (4) geschätzten Schallpegels auf einen vorbestimmten Schallpegel, der innerhalb des vorbestimmten Bereichs liegt, um diesen an das Schallpegel-Einstellungsmittel (5) anzulegen,

    angeordnet ist.

2.  Spracherkennungsvorrichtung nach Anspruch 1, worin das Schallpegel-Schätzmittel (4) zum Schätzen des Schallpegels der Schallperiode auf der Grundlage des digitalen Schallsignals in einem vorgeschriebenen Zeitraum zu Beginn der von den Eingabemitteln (1, 2) eingegebenen Schallperiode angeordnet ist.

3.  Spracherkennungsvorrichtung nach Anspruch 2, worin das Schallpegel-Schätzmittel (4) zum Schätzen des Mittelwerts des digitalen Schallsignals im vorgeschriebenen Zeitraum zu Beginn der von den Eingabemitteln (1, 2) eingegebenen Schallperiode als den Schallpegel der Schallperiode angeordnet ist.

4.  Spracherkennungsvorrichtung nach einem der vorangegangenen Ansprüche, worin das Schallpegel-Einstellungsmittel (5) zum Verstärken oder Dämpfen des Pegels des digitalen Schallsignals in der von den Eingabemitteln (1, 2) eingegebenen Schallperiode um einen Verstärkungsfaktor, der durch das Verhältnis zwischen einem vorbestimmten Zielpegel und dem vom Schallpegel-Schätzmittel (4) geschätzten Schallpegel bestimmt wird, angeordnet ist.

5.  Spracherkennungsvorrichtung nach einem der vorangegangenen Ansprüche, weiters umfassend eine Verzögerungsschaltung (3), die das von den Eingabemitteln (1, 2) eingegebene digitale Schallsignal verzögert, sodass das digitale Schallsignal in der Schallperiode gemeinsam und synchron mit dem vom Schallpegel-Schätzmittel (4) geschätzten Schallpegel an das Schallpegel-Einstellungsmittel (5) angelegt wird.

6.  Spracherkennungsvorrichtung nach einem der vorangegangenen Ansprüche, worin das Schallpegel-Schätzmittel (4) Folgendes umfasst:

    einen Schalldetektor (7), der den Anfangspunkt des digitalen Schallsignals in der von den Eingabemitteln (1, 2) eingegebenen Schallperiode detektiert;
    einen Schallpegelschätzer (4), der den Schallpegel der Schallperiode auf der Grundlage des digitalen Schallsignals in einem vorgeschriebenen Zeitraum zu Beginn der von den Eingabemitteln (1, 2) eingegebenen Schallperiode schätzt;
    eine Halteschaltung (8), die den vom Schallpegelschätzer (4) geschätzten Schallpegel hält; und
    eine Speicherschaltung, die das digitale Schallsignal in der von den Eingabemitteln (1, 2) eingegebenen Schallperiode als Reaktion auf die Detektion des Schalldetektors speichert und das gespeicherte digitale Schallsignal in der Schallperiode synchron mit dem in der Halteschaltung gehaltenen Schallpegel an das Schallpegel-Einstellungsmittel ausgibt.

7.  Spracherkennungsvorrichtung nach Anspruch 6, worin die Speicherschaltung einen ersten und einen zweiten Puffer (21, 22) umfasst, die zum alternativen Speichern des digitalen Schallsignals in der von den Eingabemitteln (1, 2) eingegebenen Schallperiode und zum alternierenden Ausgeben des gespeicherten digitalen Schallsignals in der Schallperiode an das Schallpegel-Einstellungsmittel (5) angeordnet sind.

8. Spracherkennungsvorrichtung nach einem der vorangegangenen Ansprüche, worin
das Spracherkennungsmittel (6) zum Rückkoppeln eines Ergebnisses der Spracherkennung zum Schallpegel-Einstellungsmittel (5) angeordnet ist, und
das Schallpegel-Einstellungsmittel (5) zum Ändern des Grads der Einstellung auf den Schallpegel auf der Grundlage des vom Spracherkennungsmittel (6) rückgekoppelten Ergebnisses der Spracherkennung angeordnet ist.

9. Spracherkennungsvorrichtung nach Anspruch 8, worin das Schallpegel-Einstellungsmittel (5) zum Anheben des Verstärkungsfaktors für den Schallpegel, wenn die Spracherkennung durch das Spracherkennungsmittel (6) nicht möglich ist, angeordnet ist.

10. Spracherkennungsverfahren, umfassend die folgenden Schritte:

das Eingeben eines digitalen Schallsignals;
das Schätzen des Schallpegels einer Schallperiode auf der Grundlage des eingegebenen digitalen Schallsignals in einem Teil der Schallperiode;
das Einstellen des Pegels des digitalen Schallsignals in der Schallperiode auf der Grundlage des geschätzten Schallpegels und eines vorbestimmten Zielpegels;
das Durchführen der Spracherkennung auf der Grundlage des eingestellten digitalen Schallsignals; und **gekennzeichnet durch**
das Deaktivieren des Schritts des Einstellens des Pegels des digitalen Schallsignals, wenn der geschätzte Schallpegel innerhalb eines vorbestimmten Bereichs liegt; und
wenn der geschätzte Schallpegel nicht innerhalb des vorbestimmten Bereichs liegt, das Aktivieren des Einstellungsschritts und das Ändern des geschätzten Schallpegels auf einen Schallpegel, der innerhalb des vorbestimmten Bereichs liegt, zur Verwendung beim Einstellen des Pegels des digitalen Schallsignals.

11. Spracherkennungsverfahren nach Anspruch 10, worin der Schritt des Schätzens des Schallpegels das Schätzen des Schallpegels der Schallperiode auf der Grundlage des digitalen Schallsignals in einem vorgeschriebenen Zeitraum zu Beginn der Schallperiode umfasst.

12. Spracherkennungsverfahren nach Anspruch 11, worin der Schritt des Schätzens des Schallpegels das Schätzen des Mittelwerts des digitalen Schallsignals im vorgeschriebenen Zeitraum zu Beginn der Schallperiode als den Schallpegel der Schallperiode umfasst.

13. Spracherkennungsverfahren nach einem der Ansprüche 10 bis 12, worin der Schritt des Einstellens des Pegels des digitalen Schallsignals das Verstärken oder Dämpfen des Pegels des digitalen Schallsignals in der Schallperiode um einen Verstärkungsfaktor, der durch das Verhältnis zwischen dem vorbestimmten Zielpegel und dem geschätzten Schallpegel bestimmt wird, umfasst.

14. Spracherkennungsverfahren nach einem der Ansprüche 10 bis 13, weiters umfassend den Schritt des Verzögerns des digitalen Schallsignals, sodass das digitale Schallsignal in der Schallperiode gemeinsam und synchron mit dem geschätzten Schallpegel auf den Schritt des Einstellens des Pegels des digitalen Schallsignals angewendet wird.

15. Spracherkennungsverfahren nach einem der Ansprüche 10 bis 14, worin der Schritt des Schätzens des Schallpegels die folgenden Schritte umfasst:

das Detektieren des Anfangspunkts des digitalen Schallsignals in der Schallperiode;
das Schätzen des Schallpegels der Schallperiode auf der Grundlage des digitalen Schallsignals in einem vorgeschriebenen Zeitraum zu Beginn der Schallperiode;
das Speichern des digitalen Schallsignals in der Schallperiode als Reaktion auf die Detektion des Anfangspunkts des digitalen Schallsignals und das Ausgeben des gespeicherten digitalen Schallsignals in der Schallperiode synchron mit dem gehaltenen Schallpegel.

16. Spracherkennungsverfahren nach Anspruch 15, worin der Schritt des Speicherns den Schritt des Speicherns des digitalen Schallsignals in der Schallperiode alternierend in einem ersten und einem zweiten Puffer und das Ausgeben des gespeicherten digitalen Schallsignals in der Schallperiode alternativ aus dem ersten und dem zweiten Puffer umfasst.

**17.** Spracherkennungsverfahren nach einem der Ansprüche 10 bis 16, worin
der Schritt des Durchführens der Spracherkennung den Schritt des Rückkoppelns eines Ergebnisses der Spracherkennung während des Schritts des Einstellens des Pegels des digitalen Schallsignals umfasst, und
der Schritt des Einstellens des Pegels des digitalen Schallsignals das Ändern des Grads der Einstellung des Schallpegels auf der Grundlage des rückgekoppelten Ergebnisses der Spracherkennung umfasst.

**18.** Spracherkennungsverfahren nach Anspruch 17, worin der Schritt des Einstellens des Pegels des digitalen Schallsignals das Anheben des Verstärkungsfaktors für den Schallpegel umfasst, wenn die Spracherkennung nicht möglich ist.

**19.** Computerlesbares Spracherkennungsprogramm, das einen Computer die Ausführung der folgenden Schritte ermöglicht:

das Eingeben eines digitalen Schallsignals;
das Schätzen des Schallpegels einer Schallperiode auf der Grundlage des eingegebenen digitalen Schallsignals in einem Teil der Schallperiode;
das Einstellen des Pegels des eingegebenen digitalen Schallsignals in der Schallperiode auf der Grundlage des geschätzten Schallpegels und eines vorbestimmten Zielpegels;
das Durchführen der Spracherkennung auf der Grundlage des eingestellten digitalen Schallsignals; und
das Deaktivieren des Schritts des Einstellens des Schallpegels des digitalen Schallsignals, wenn der geschätzte Schallpegel innerhalb eines vorbestimmten Bereichs liegt; und
wenn der geschätzte Schallpegel nicht innerhalb des vorbestimmten Bereichs liegt, das Aktivieren des Einstellungsschritts und das Ändern des geschätzten Schallpegels auf einen Schallpegel, der innerhalb des vorbestimmten Bereichs liegt, zur Verwendung beim Einstellen des Pegels des digitalen Schallsignals.

**Revendications**

**1.** Dispositif de reconnaissance de la parole comprenant :

des moyens d'entrée (1, 2) arrangés pour entrer un signal de son numérique ;
un moyen d'estimation de niveau sonore (4) arrangé pour estimer le niveau sonore d'une période sonore en se basant sur le signal sonore numérique dans une partie de ladite entrée de période sonore effectuée par lesdits moyens d'entrée (1, 2);
un moyen d'ajustement de niveau sonore (5) arrangé pour ajuster le niveau du signal sonore numérique dans ladite période sonore entrée par lesdits moyens d'entrée (1, 2) en se basant sur le niveau sonore estimé par ledit moyen d'estimation de niveau sonore (4) et un niveau cible prédéfini ;
un moyen de reconnaissance de la parole (6) arrangé pour procéder à une reconnaissance de la parole en se basant sur le signal sonore numérique ajusté par ledit moyen d'ajustement de niveau sonore (5) ; et **caractérisé par** :

un processeur non linéaire (11) arrangé pour :

inactiver ledit moyen d'ajustement de niveau sonore (5) lorsque le niveau sonore estimé par ledit moyen d'estimation de niveau sonore (4) se trouve dans une plage prédéterminée ; et
lorsque le niveau sonore estimé par le moyen d'estimation de niveau sonore (4) n'est pas dans la plage prédéterminée, activer ledit moyen d'ajustement de niveau sonore (5) et changer le niveau sonore estimé par ledit moyen d'estimation de niveau sonore (4) en un niveau sonore prédéterminé qui est situé dans la plage prédéterminée pour une application au dit moyen d'ajustement de niveau sonore (5).

**2.** Dispositif de reconnaissance de la parole selon la revendication 1, dans lequel ledit moyen d'estimation de niveau sonore (4) est arrangé pour estimer le niveau sonore de ladite période sonore en se basant sur le signal sonore numérique dans une période de temps prescrite au début de ladite entrée de période sonore effectuée par lesdits moyens d'entrée (1, 2).

**3.** Dispositif de reconnaissance de la parole selon la revendication 2, dans lequel ledit moyen d'estimation de niveau sonore (4) est arrangé pour estimer la valeur moyenne du signal sonore numérique dans la période de temps prescrite au début de ladite entrée de période sonore effectuée par lesdits moyens d'entrée (1, 2) en tant que niveau sonore de ladite période sonore.

**4.** Dispositif de reconnaissance de la parole selon l'une quelconque des revendications précédentes, dans lequel ledit moyen d'ajustement de niveau sonore (5) est arrangé pour amplifier ou atténuer le niveau du signal sonore numérique dans ladite entrée de période sonore effectuée par lesdits moyens d'entrée (1, 2) d'un facteur d'amplification déterminé par le rapport entre ledit niveau cible prédéfini et le niveau sonore estimé par ledit moyen d'estimation de niveau sonore (4).

**5.** Dispositif de reconnaissance de la parole selon l'une quelconque des revendications précédentes, comprenant en outre un circuit de temporisation (3) qui retarde l'entrée de signal sonore numérique effectuée par lesdits moyens d'entrée (1, 2), de manière à ce que le signal sonore numérique dans ladite période sonore soit appliqué au dit moyen d'ajustement de niveau sonore (5) avec, et de manière synchronisée avec, le niveau sonore estimé par le moyen d'estimation de niveau sonore (4).

**6.** Dispositif de reconnaissance de la parole selon l'une quelconque des revendications précédentes, dans lequel ledit moyen d'estimation de niveau sonore (4) comprend :

un détecteur sonore (7) qui détecte le point de départ du signal sonore numérique dans ladite entrée de période sonore effectuée par lesdits moyens d'entrée (1, 2) ;
un estimateur de niveau sonore (4) qui estime le niveau sonore de ladite période sonore en se basant sur le signal sonore numérique dans une période de temps prescrite au début de ladite entrée de période sonore effectuée par lesdits moyens d'entrée (1, 2) ;
un circuit de maintien (8) qui conserve le niveau sonore estimé par ledit estimateur de niveau sonore (4) ; et
un circuit de stockage qui stocke le signal sonore numérique dans ladite entrée de période sonore effectuée par lesdits moyens d'entrée en réponse à la détection par ledit détecteur sonore, et qui délivre en sortie le signal sonore numérique stocké dans ladite période sonore au dit moyen d'ajustement de niveau sonore de manière synchronisée avec le niveau sonore conservé dans ledit circuit de maintien.

**7.** Dispositif de reconnaissance de la parole selon la revendication 6, dans lequel ledit circuit de stockage comprend un premier et un second tampons (21, 22) arrangés pour, alternativement, stocker le signal sonore numérique dans ladite entrée de période sonore effectuée par lesdits moyens d'entrée (1, 2) et, alternativement, délivrer en sortie le signal sonore numérique stocké dans ladite période sonore au dit moyen d'ajustement de niveau sonore (5).

**8.** Dispositif de reconnaissance de la parole selon l'une quelconque des revendications précédentes, dans lequel ledit moyen de reconnaissance de la parole (6) est arrangé pour retourner un résultat de reconnaissance de la parole au dit moyen d'ajustement de niveau sonore (5), et
ledit moyen d'ajustement de niveau sonore (5) est arrangé pour changer le degré d'ajustement au dit niveau sonore en se basant sur le résultat de la reconnaissance de la parole retourné depuis ledit moyen de reconnaissance de la parole (6).

**9.** Dispositif de reconnaissance de la parole selon la revendication 8, dans lequel ledit moyen d'ajustement de niveau sonore (5) est arrangé pour augmenter un facteur d'amplification pour ledit niveau sonore lorsque la reconnaissance de la parole par ledit moyen de reconnaissance de la parole (6) n'est pas possible.

**10.** Procédé de reconnaissance de la parole, comprenant les étapes consistant à :

entrer un signal de son numérique ;
estimer le niveau sonore d'une période sonore en se basant sur ledit signal sonore numérique entré dans une partie de la période sonore ;
ajuster le niveau du signal sonore numérique dans ladite période sonore en se basant sur ledit niveau sonore estimé et un niveau cible prédéfini ;
procéder à une reconnaissance de la parole en se basant sur ledit signal sonore numérique ajusté ; et **caractérisé par** :

l'inactivation de l'étape consistant à ajuster le niveau du signal sonore numérique lorsque ledit niveau sonore estimé se trouve dans une plage prédéterminée ; et
lorsque ledit niveau sonore estimé n'est pas dans la plage prédéterminée, l'activation de ladite étape d'ajustement et le changement dudit niveau sonore estimé en un niveau sonore qui est situé dans ladite plage prédéterminée pour une utilisation dans l'ajustement du niveau dudit signal sonore numérique.

11. Procédé de reconnaissance de la parole selon la revendication 10, dans lequel ladite étape d'estimation du niveau sonore comprend d'estimer le niveau sonore de ladite période sonore en se basant sur le signal sonore numérique dans une période de temps prescrite au début de ladite période sonore.

12. Procédé de reconnaissance de la parole selon la revendication 11, dans lequel ladite étape d'estimation du niveau sonore comprend d'estimer la valeur moyenne du signal sonore numérique dans la période de temps prescrite au début de ladite période sonore en tant que niveau sonore de ladite période sonore.

13. Procédé de reconnaissance de la parole selon l'une quelconque des revendications 10 à 12, dans lequel ladite étape d'ajustement du niveau dudit signal sonore numérique comprend d'amplifier ou d'atténuer le niveau du signal sonore numérique dans ladite période sonore d'un facteur d'amplification déterminé par le rapport entre ledit niveau cible prédéfini et ledit niveau sonore estimé.

14. Procédé de reconnaissance de la parole selon l'une quelconque des revendications 10 à 13, comprenant en outre l'étape consistant à retarder le signal sonore numérique, de manière à ce que ledit signal sonore numérique dans ladite période sonore soit appliqué avec, et de manière synchronisée avec, ledit niveau sonore estimé à l'étape d'ajustement du niveau dudit signal sonore numérique.

15. Procédé de reconnaissance de la parole selon l'une quelconque des revendications 10 à 14, dans lequel ladite étape d'estimation du niveau sonore comprend les étapes consistant à :

    détecter le point de départ du signal sonore numérique dans ladite période sonore ;
    estimer le niveau sonore de ladite période sonore en se basant sur le signal son ore numérique dans une période de temps prescrite au début de ladite période sonore ;
    stocker le signal sonore numérique dans ladite période sonore en réponse à la détection du point de départ dudit signal sonore numérique, et délivrer en sortie ledit signal sonore numérique stocké dans ladite période sonore de manière synchronisée avec le niveau sonore conservé.

16. Procédé de reconnaissance de la parole selon la revendication 15, dans lequel ladite étape de stockage comprend l'étape consistant à stocker le signal sonore numérique dans ladite période sonore alternativement dans un premier et un second tampons, et à délivrer en sortie le signal sonore numérique stocké dans ladite période sonore alternativement depuis le premier et le second tampons.

17. Procédé de reconnaissance de la parole selon l'une quelconque des revendications 10 à 16, dans lequel ladite étape consistant à procéder à une reconnaissance de la parole comprend l'étape consistant à retourner un résultat de reconnaissance de la parole au cours de ladite étape d'ajustement du niveau du signal sonore numérique, et ladite étape consistant à ajuster le niveau du signal sonore numérique comprend de changer le degré d'ajustement dudit niveau sonore en se basant sur ledit résultat retourné de la reconnaissance de la parole.

18. Procédé de reconnaissance de la parole selon la revendication 17, dans lequel ladite étape consistant à ajuster le niveau du signal sonore numérique comprend d'augmenter le facteur d'amplification pour ledit niveau sonore lorsque ladite reconnaissance de la parole n'est pas possible.

19. Programme de reconnaissance de la parole lisible par un ordinateur, permettant à un ordinateur d'exécuter les étapes consistant à :

    entrer un signal de son numérique ;
    estimer le niveau sonore d'une période sonore en se basant sur ledit signal sonore numérique entré dans une partie de ladite période sonore ;
    ajuster le niveau dudit signal sonore numérique entré dans ladite période sonore en se basant sur ledit niveau sonore estimé et un niveau cible prédéfini ;
    procéder à une reconnaissance de la parole en se basant sur ledit signal sonore numérique ajusté ; et
    inactiver l'étape consistant à ajuster le niveau du signal sonore numérique lorsque ledit niveau sonore estimé se trouve dans une plage prédéterminée ; et
    lorsque ledit niveau sonore estimé n'est pas dans la plage prédéterminée, activer ladite étape d'ajustement et changer ledit niveau sonore estimé en un niveau sonore qui est situé dans ladite plage prédéterminée pour une utilisation pour l'ajustement du niveau dudit signal sonore numérique.

F I G. 1

FIG. 2

F I G . 3

RA          GU          BI

P

SOUND LEVEL

TS

TIME

PERIOD FOR ONE
SPOKEN WORD

TL'

SOUND LEVEL
RISING TIME TL

EP 1 300 832 B1

F I G . 5

FIG. 6

```
                    ┌─────────────┐
                    │    START    │
                    └──────┬──────┘
                           │      ┌──────────────────────────┐
                           ▼      │                          │
                    ╱────────────╲          S61              │
                  ╱ INPUT SIGNAL = ╲        No                │
                 ╱ SOUND SIGNAL ?   ╲──────────────────────────┘
                  ╲                ╱
                    ╲────────────╱
                        │ Yes
                        ▼                      S62
          ┌────────────────────────────────────────┐
          │ APPLY CONTROL SIGNAL CIS1 TO SELECTOR 11│
          └────────────────────┬───────────────────┘
                               │◄──────────────────────┐
                               ▼            S63         │
          ┌────────────────────────────────────────┐   │
          │ APPLY CONTROL SIGNAL CB1 TO BUFFER 21   │   │
          └────────────────────┬───────────────────┘   │
                               ▼                         │
                        ╱────────────╲    S64            │
                      ╱  FULL SIGNAL   ╲    No            │
                     ╱  F1 RECEIVED ?   ╲─────────────────┘
                      ╲                ╱
                        ╲────────────╱
                           │ Yes             S65
                           ▼
          ┌────────────────────────────────────────┐
          │ APPLY CONTROL SIGNAL CIS2 TO SELECTOR 11│
          └────────────────────┬───────────────────┘
                               ▼            S66
          ┌────────────────────────────────────────┐
          │ APPLY CONTROL SIGNAL CB2 TO BUFFER 22   │
          └────────────────────┬───────────────────┘
                               ▼            S67
          ┌────────────────────────────────────────┐
          │ APPLY CONTROL SIGNAL COS1 TO SELECTOR 12│
          └────────────────────┬───────────────────┘
                               ▼            S68
          ┌────────────────────────────────────────┐
          │ APPLY SL1 TO SOUND LEVEL HOLDER 8       │
          └────────────────────┬───────────────────┘
                               │◄──────────────────────┐
                               ▼                         │
          ┌────────────────────────────────────────┐    │
          │ OUTPUT FROM BUFFER 21 TO SOUND LEVEL    │ S69│
          │ ADJUSTER 5                              │    │
          └────────────────────┬───────────────────┘    │
                               ▼        S70              │
                        ╱────────────╲     No            │
                      ╱ ALL DIGITAL    ╲                 │
                     ╱ SOUND SIGNALS DS ╲────────────────┘
                      ╲  OUTPUT ?      ╱
                        ╲────────────╱
                           │ Yes            S71
                           ▼
          ┌────────────────────────────────────────┐
          │ APPLY CONTROL SIGNAL CR TO BUFFER 21    │
          └────────────────────┬───────────────────┘
                               ▼
                    ┌─────────────┐
                    │     END     │
                    └─────────────┘
```

# F I G . 7

F I G . 8

# F I G . 9

```
           ┌──────────────┐
           │    START     │
           └──────┬───────┘
                  │
                  ▼
          ◇ SOUND LEVEL              S91
          CONTROL SIGNAL RC INPUT ──── No
          FROM SPEECH RECOGNITION
          FEEDBACK UNIT ? ◇
                  │ Yes
                  ▼
          ┌──────────────┐            S92
          │  K = K + 1   │
          └──────┬───────┘
                  │
                  ▼
          ◇  K > R ?  ◇────── No        S93
                  │ Yes
                  ▼
          ┌──────────────┐            S94
          │   K = 1      │
          └──────┬───────┘
                  │
                  ▼
          ┌──────────────────┐        S95
          │ SET TRG_LVL TO   │
          │ TRG_LVL (K)      │
          └──────┬───────────┘
                  │
                  ▼
           ┌──────────────┐
           │    END       │
           └──────────────┘
```

F I G . 1 0

FIG. 11

EP 1 300 832 B1

F I G . 1 2

START

S101

Yes ← FOR SOUND LEVEL
ESTIMATION VALUE LVL
$-19dB \leqq LVL \leqq -2dB$
?

No

S102

SET SOUND LEVEL ESTIMATION
VALUE LVL TO $-10dB$

END

32

F I G . 1 3